(19)

**Europäisches Patentamt**
**European Patent Office**
**Office européen des brevets**

(11) **EP 4 578 899 A1**

(12) **EUROPEAN PATENT APPLICATION**

(43) Date of publication:
**02.07.2025 Bulletin 2025/27**

(21) Application number: **24223096.9**

(22) Date of filing: **23.12.2024**

(51) International Patent Classification (IPC):
**C08J 5/18** (2006.01) **B01D 71/26** (2006.01)
**H01M 50/417** (2021.01)

(52) Cooperative Patent Classification (CPC):
**C08J 5/18; B01D 67/0009; B01D 67/0027; B01D 71/261; B01D 71/262; H01M 50/417; H01M 50/489; H01M 50/491;** B01D 2323/20; B01D 2325/02; B01D 2325/22; B01D 2325/24; C08J 2323/12; C08J 2423/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.12.2023 KR 20230192688**

(71) Applicants:
• **SK Innovation Co., Ltd.**
**Seoul 03188 (KR)**

• **SK ie technology Co., Ltd.**
**Jongno-gu**
**Seoul**
**03188 (KR)**

(72) Inventor: **JUNG, In Hwa**
**34124 Daejeon (KR)**

(74) Representative: **Prüfer & Partner mbB**
**Patentanwälte · Rechtsanwälte**
**Sohnckestraße 12**
**81479 München (DE)**

(54) **POLYOLEFIN MICROPOROUS MEMBRANE, METHOD FOR MANUFACTURING THE MICROPOROUS MEMBRANE, AND SEPARATOR INCLUDING THE MICROPOROUS MEMBRANE**

(57) Provided are a polyolefin microporous membrane, a method for manufacturing the same, and a separator including the microporous membrane. According to an exemplary embodiment, a polyolefin microporous membrane including: 60 wt% to 80 wt% of a polypropylene having a viscosity average molecular weight of $1\times10^6$ g/mol to $3\times10^6$ g/mol and 20 wt% to 40 wt% of a polyethylene having a weight average molecular weight of $1\times10^5$ g/mol to $10\times10^5$ g/mol is provided, wherein the polyolefin microporous membrane has a puncture strength of 0.25 N/um or more, a gas permeability of $1.0\times10^{-5}$ Darcy or more, a porosity of 30% to 70%, an average pore size of 20 nm to 40 nm, and a shutdown temperature of 150°C or lower.

**EP 4 578 899 A1**

## Description

## TECHNICAL FIELD

The following disclosure relates to a polyolefin microporous membrane, a method for manufacturing the microporous membrane, and a separator including the microporous membrane. According to an embodiment, the following disclosure relates to a polyolefin microporous membrane having high puncture strength, gas permeability and improved heat resistance even at low film thicknesses, to a method for manufacturing the same, to a separator including the microporous membrane, and to an electrochemical device such as a secondary lithium battery.

## BACKGROUND

A polyolefin microporous membrane is used in various fields such as a separation filter, a separator for a secondary battery, a separator for a fuel cell, and a separator for a supercapacitor. Among them, it is widely used as a separator for a secondary battery, since it provides excellent electrical insulation and ion permeability.

Recently, since a secondary battery has a higher capacity and an increased size when applied in an electric vehicle, an energy storage system (ESS), securing battery safety is a particularly important element. For example, when a battery is exposed to or operated in a high temperature environment, a separator may shrink, thereby causing an internal short circuit which may increase a risk for ignition.

A polyolefin microporous membrane for a secondary battery separator typically has a shutdown function to secure battery safety. A shutdown function is a function of significantly increasing resistance of a separator by melting a polyolefin to close holes. Even when a temperature rise occurs due to occurrence of battery abnormality, the internal resistance of a battery is increased by the function, and thus, current does not substantially flow, and safety is significantly improved.

When a battery is exposed to a higher temperature, the separator is ruptured (via meltdown), and a positive electrode and a negative electrode are internally short-circuited which significantly increases a risk of ignition. Since a secondary battery with a higher capacity and a larger size shows a faster heating rate, there is a risk of meltdown before a shutdown function is properly induced.

Therefore, development of a polyolefin microporous membrane having excellent heat resistance so that it may withstand a rapid temperature rise of a battery is needed. In addition, high mechanical strength is required for improving safety of a battery manufacturing process and during use of the battery, particularly at high temperature, together with high heat resistance and gas permeability to improve both capacity and power.

[Related Art Documents]

[Patent Document]

Korean Patent Laid-Open Publication No. 10-2011-0101202.

## SUMMARY

An embodiment of the present disclosure is directed to providing a polyolefin microporous membrane having improved heat resistance at a high temperature, a method for manufacturing the microporous membrane, and a separator including the microporous membrane.

Another embodiment of the present disclosure is directed to providing a polyolefin microporous membrane having improved mechanical strength, such as a high puncture strength, in particular, and high gas permeability even at low film thicknesses in the range of several micrometers to several tens of micrometers, a method for manufacturing the microporous membrane, and a separator including the microporous membrane.

The polyolefin microporous membrane and the separator of the present disclosure may be widely applied to a green technology field such as electric vehicles, battery charging stations, and other solar power generation and wind power generation using batteries. The polyolefin microporous membrane and the separator of the present disclosure may be used in eco-friendly electric vehicles, hybrid vehicles, and similar large devices or systems for mitigating climate change by reducing air pollution and greenhouse gas emission.

In one general aspect, a polyolefin microporous membrane includes: 60 wt% to 80 wt% of a polypropylene having a viscosity average molecular weight of $1\times10^6$ g/mol to $3\times10^6$ g/mol and 20 wt% to 40 wt% of a polyethylene having a weight average molecular weight of $1\times10^5$ g/mol to $10\times10^5$ g/mol, wherein the polyolefin microporous membrane has a puncture strength of 0.25 N/um or more, a gas permeability of $1.0\times10^{-5}$ Darcy or more, a porosity of 30% to 70%, an average pore size of 20 nm to 40 nm, and a shutdown temperature of 150°C or lower.

In an exemplary embodiment, the polypropylene may have a melting temperature of 160°C or higher.

In an exemplary embodiment, the polyethylene may have a melting temperature of 133°C or higher.

In an exemplary embodiment, the microporous membrane may have a thickness of 3 um to 30 $\mu$m.

In an embodiment, the shutdown temperature may be 149°C or lower.

In an exemplary embodiment, the microporous membrane may have a meltdown temperature of 180°C or higher.

In an exemplary embodiment, the polyolefin microporous membrane may be manufactured by a wet method including a sequential biaxial stretching process.

In another general aspect, a method for manufacturing a polyolefin microporous membrane includes: (a) melt kneading a mixture including a polyolefin resin and a diluent through an extruder to prepare a molten material; (b) extruding the molten material to be molded into a sheet form; (c) sequentially biaxially stretching the sheet in machine direction(MD) (longitudinal direction) and transverse direction(TD) to be molded into a film; (d) extracting the diluent from the stretched film and drying the film; and (e) heat treating the dried film. Herein, the polyolefin resin of (a) may include 60 wt% to 80 wt% of the polypropylene having the viscosity average molecular weight of $1\times10^6$ g/mol to $3\times10^6$ g/mol and 20 wt% to 40 wt% of the polyethylene having the weight average molecular weight of $1\times10^5$ g/mol to $10\times10^5$ g/mol.

In an exemplary embodiment, (d) may be extracting the diluent from the stretched film and drying the film with shrinkages of 5% or less in the machine direction and 10% or less in the transverse direction.

In an exemplary embodiment, (e) may be heat treating the dried film in a temperature range between a melting temperature of the polyethylene (Tm) and a temperature higher than the melting temperature by 8°C (Tm + 8°C).

In still another general aspect, a separator includes the polyolefin microporous membrane described above.

In an exemplary embodiment, an electrochemical device includes the separator.

In an exemplary embodiment, the electrochemical device is a secondary battery comprising said separator between a positive and a negative electrode.

Other features and aspects will be apparent from the following detailed description, the drawings, and the claims.

## DETAILED DESCRIPTION OF EMBODIMENTS

The embodiments described in the present specification may be modified in many different forms, and the technology according to an exemplary embodiment is not limited to the embodiments set forth herein. In addition, the embodiment of an exemplary embodiment is provided so that the present disclosure will be further fully described to a person with ordinary skill in the art.

In addition, the singular form used in the specification and claims appended thereto may be intended to include a plural form also, unless otherwise indicated in the context.

In addition, the numerical range used in the present specification includes all values within the range including the lower limit and the upper limit, increments logically derived in a form and span of a defined range, all double limited values, and all possible combinations of the upper limit and the lower limit in the numerical range defined in different forms. Unless otherwise defined in the present specification, values which may be outside a numerical range due to experimental error or rounding off of a value are also included in the defined numerical range.

Furthermore, throughout the specification, unless explicitly described to the contrary, "comprising" any constituent elements will be understood to imply further inclusion of other constituent elements rather than exclusion of other constituent elements.

In one general aspect, a polyolefin microporous membrane includes: 60 wt% to 80 wt% of a polypropylene having a viscosity average molecular weight of $1\times10^6$ g/mol to $3\times10^6$ g/mol and 20 wt% to 40 wt% of a polyethylene having a weight average molecular weight of $1\times10^5$ g/mol to $10\times10^5$ g/mol, wherein the polyolefin microporous membrane has a puncture strength of 0.25 N/um or more, a gas permeability of $1.0\times10^{-5}$ Darcy or more, a porosity of 30% to 70%, an average pore size of 20 nm to 40 nm, and a shutdown temperature of 150°C or lower.

The polyolefin microporous membrane may be formed by using a polypropylene having a viscosity average molecular weight of $1\times10^6$ g/mol to $3\times10^6$ g/mol and a polyethylene having a weight average molecular weight of $1\times10^5$ g/mol to $10\times10^5$ g/mol.

The puncture strength may be measured by attaching a pin tip (such as one having a diameter of 1.0 mm and a radius of curvature of 0.5 mm) and pressing the sample of the microporous membrane at a suitable speed (of, e.g., 120 mm/min) against the pin tip, and then calculating the puncture strength by dividing the load (N) when the microporous membrane was broken by the thickness ($\mu$m) of the microporous membrane sample.

The average pore size may be measured using a porometer, for example in accordance with ASTM F316-03.

Recently, as a secondary battery has higher capacity and gets larger, it is required that improved battery performance and safety are met, and to this end, it is required that a separator for a secondary battery has higher levels of heat resistance and gas permeability simultaneously. To this end, a polypropylene having a high melting temperature is used as a material for a separator of a secondary battery, but the polypropylene microporous membrane manufactured by a dry process is inappropriate for being used in a secondary battery field due to its low puncture strength and excessively large and non-uniform pore size.

As a result of repeated research by the inventors, it was confirmed that a polyolefin microporous membrane having significantly improved heat resistance at a high temperature while having excellent puncture strength and gas permeability may be manufactured by implementing the puncture strength, the gas permeability, the porosity, the average pore size, and the shutdown temperature, in the ranges described above simultaneously. Optionally, a meltdown temperature in the above described range may be controlled simultaneously as well.

A secondary battery according to an exemplary embodiment may secure both excellent battery performance and safety, by including the polyolefin microporous membrane satisfying the physical properties as described above simultaneously. In particular, the present disclosure may provide a secondary battery including a microporous membrane which has closed pores at a temperature of 150°C or lower and may maintain a separator form even at a temperature of 180°C or higher. That is, since the polyolefin microporous membrane of the present disclosure satisfies the physical properties as described above simultaneously, the microporous membrane is appropriate for being applied to a high-power/ high-capacity battery.

The polyolefin microporous membrane may be manufactured by a wet method including a sequential biaxial stretching process unless it goes beyond the scope of the present disclosure.

As an exemplary embodiment, the polyolefin microporous membrane which satisfies the physical properties as described above simultaneously may be manufactured by including a specific polyethylene resin and a specific polypropylene resin at a specific composition ratio. For example, the microporous membrane according to an exemplary embodiment may include 60 wt% to 80 wt% of the polypropylene having the viscosity average molecular weight of $1 \times 10^6$ g/mol to $3 \times 10^6$ g/mol and 20 wt% to 40 wt% of the polyethylene having the weight average molecular weight of $1 \times 10^5$ g/mol to $10 \times 10^5$ g/mol. The viscosity average molecular weight may be determined by measuring an intrinsic viscosity ($\eta$) using 1,2,4-trichlorobenzene (TCB) as a solvent and applying a Margolies-equation. The weight average molecular weight may be determined via gel permeation chromatography (GPC) using TCB as a solvent. In addition, in an exemplary embodiment, the polypropylene may have a melting temperature of 160°C or higher, 162°C or higher and 170°C or lower, 165°C or lower, or a value between the above numerical values. For example, the polypropylene may have a melting temperature of 160°C to 170°C or 162°C to 165°C. In addition, in an exemplary embodiment, the polyethylene may have a melting temperature of 133°C or higher, 133°C to 140°C, or 133°C to 135°C. The melting temperature of the polypropylene and the polyethylene may be determined by DSC.

As an exemplary embodiment, the polyolefin microporous membrane may be manufactured by including the raw material resins used at a specific composition ratio and performing extraction/drying process under specific conditions. For example, the polyolefin microporous membrane may be manufactured by extruding and sequentially biaxially stretching a mixture of a diluent dissolved in a polyolefin resin including a polyethylene resin and a polypropylene resin at a specific composition ratio to manufacture a film form, extracting the diluent from the film, and drying the film at a specific shrinkage rate. For example, the diluent may be extracted from the stretched film and the film may be dried with shrinkages of 5% or less in a machine direction and 10% or less in a transverse direction. Accordingly, since the polyolefin microporous membrane satisfies all of the physical properties described above, it has excellent mechanical strength and permeability and also significantly improved heat resistance at a high temperature.

As an exemplary embodiment, the polyolefin microporous membrane may be manufactured by including the raw material resins used at a specific composition ratio and performing a heat treatment process at a specific temperature. For example, the heat treatment process of the mixed polyolefin microporous membrane of the polypropylene and the polyethylene may be performed in a temperature range between a melting temperature of polyethylene (Tm) and a temperature higher than the melting temperature by 8°C (Tm + 8°C) among the components.

By combining the above conditions with each other, the polyolefin microporous membrane of the present disclosure satisfies all of the physical properties described above, and thus, has excellent mechanical strength and permeability and also significantly improved heat resistance at a high temperature. That is, the present disclosure may provide a polyolefin microporous membrane having a puncture strength of 0.25 N/um or more, a gas permeability of $1.0 \times 10^{-5}$ Darcy or more, a porosity of 30% to 70%, an average pore size of 20 nm to 40 nm, and a shutdown temperature of 150°C or lower. Further, a meltdown temperature of 180°C or higher may be provided in addition.

Hereinafter, the polyolefin microporous membrane will be described in more detail.

In an exemplary embodiment, the polypropylene included in the polyolefin microporous membrane may have a viscosity average molecular weight of $1 \times 10^6$ g/mol or more, $1.2 \times 10^6$ g/mol or more, $1.3 \times 10^6$ g/mol or more and $3 \times 10^6$ g/mol or less, $2.5 \times 10^6$ g/mol or less, $2.2 \times 10^6$ g/mol or less, $1.8 \times 10^6$ g/mol or less, or a value between the above numerical values. For example, the viscosity average molecular weight of the polypropylene may be $1 \times 10^6$ g/mol to $3 \times 10^6$ g/mol, $1.2 \times 10^6$ g/mol to $2.5 \times 10^6$ g/mol, $1.3 \times 10^6$ g/mol to $2.2 \times 10^6$ g/mol, or $1.3 \times 10^6$ g/mol to $1.8 \times 10^6$ g/mol.

In an exemplary embodiment, a content of the polypropylene included in the polyolefin microporous membrane may be 60 wt% or more, 65 wt% or more, 70 wt% or more and 80 wt% or less, 75 wt% or less, or a value between the above numerical values, based on the total amount of the polyethylene and the polypropylene. For example, the content of the polypropylene may be 60 wt% to 80 wt%, 65 wt% to 75 wt%, or 70 wt% to 75 wt%. According to an exemplary embodiment, when the content of the polypropylene satisfies the above range, it may have the shutdown temperature of 150°C or lower and the meltdown temperature of 180°C or higher while having excellent puncture strength and gas permeability.

In an exemplary embodiment, the polypropylene may have a melting temperature of 160°C or higher, 162°C or higher and 170°C or lower, 165°C or lower, or a value between the above numerical values. For example, the polypropylene may have the melting temperature of 160°C to 170°C or 162°C to 165°C. According to an exemplary embodiment, when the melting temperature of the polypropylene satisfies the above range, it may have the shutdown temperature of 150°C or lower and the meltdown temperature of 180°C or higher while having excellent puncture strength and gas permeability.

In an exemplary embodiment, the polyethylene included in the polyolefin microporous membrane may have a weight average molecular weight of $1\times10^5$ g/mol or more, $3\times10^5$ g/mol or more and $10\times10^5$ g/mol or less, $9\times10^5$ g/mol or less, or a value between the above numerical values. For example, the weight average molecular weight of the polyethylene may be $1\times10^5$ g/mol to $10\times10^5$ g/mol, $3\times10^5$ g/mol to $10\times10^5$ g/mol, or $3\times10^5$ g/mol to $9\times10^5$ g/mol.

In an exemplary embodiment, a content of the polyethylene included in the polyolefin microporous membrane may be or more, 20 wt% or more, 25 wt% or more and 40 wt% or less, 35 wt% or less, or a value between the above numerical values, based on the total amount of the polypropylene and the polyethylene. For example, the content of the polyethylene may be 20 wt% to 40 wt% or 25 wt% to 35 wt%. According to an exemplary embodiment, when the content of the polyethylene satisfies the above range, the polyolefin microporous membrane may have the shutdown temperature of 150°C or lower and the meltdown temperature of 180°C or higher while having excellent puncture strength and gas permeability.

In an exemplary embodiment, the polyethylene may have a melting temperature of 133°C or higher, 133°C to 140°C, or 133°C to 135°C. According to an exemplary embodiment, when the melting temperature of the polyethylene is within the above range, the polyolefin microporous membrane may have the shutdown temperature of 150°C or lower and the meltdown temperature of 180°C or higher while having excellent puncture strength and gas permeability.

In an exemplary embodiment, the polyolefin microporous membrane may have a puncture strength of 0.25 N/um or more, 0.30 N/um or more and 1.0 N/um or less, 0.8 N/$\mu$m or less, 0.5 N/$\mu$m or less, or a value between the above numerical values. For example, the puncture strength may be 0.25 N/um to 1.0 N/$\mu$m, 0.30 N/$\mu$m to 0.8 N/$\mu$m, or 0.30 N/$\mu$m to 0.5 N/$\mu$m. Since the puncture strength in the range described above is satisfied, resistance to external stress occurring during manufacture of a battery, and/or a dendrite forming during charge and discharge of a battery, for instance, is significantly enhanced so that battery safety may be improved.

In an exemplary embodiment, the polyolefin microporous membrane may have a gas permeability of $1.0\times10^{-5}$ Darcy or more, $1.15\times10^{-5}$ Darcy or more and $5.0\times10^{-5}$ Darcy or less, $3.0\times10^{-5}$ Darcy or less, or a value between the above numerical values. For example, the gas permeability may be $1.0\times10^{-5}$ Darcy to $5.0\times10^{-5}$ Darcy or $1.15\times10^{-5}$ Darcy to $3.0\times10^{-5}$ Darcy. Since the gas permeability range described above is satisfied, ion conductivity may be excellent, and battery charge and discharge characteristics may be improved due to low battery internal resistance.

In an exemplary embodiment, the polyolefin microporous membrane may have a porosity of 30% or more, 35% or more, 37% or more and 70% or less, 60% or less, 50% or less, or a value between the above numerical values. For example, the porosity may be 30% to 70%, 35% to 60%, or 37% to 50%. The porosity may be measured by taking a sample of the microporous membrane of a defined volume (using a suitable width(A), length(B), and thickness(T)), measuring its mass, and calculating the porosity from a ratio between a mass of a resin having the same volume and the measured mass of the microporous membrane:

$$\texttt{Porosity (\%) = 100} \times \{1-M/(A \times B \times T \times \rho)\}$$

wherein M is a mass (g) of a microporous membrane, and $\rho$ is a density (g/cm$^3$) of a polypropylene resin forming a microporous membrane.

In an exemplary embodiment, the polyolefin microporous membrane may have an average pore size of 20 nm or more, 24 nm or more and 40 nm or less, 35 nm or less, or a value between the above numerical values. For example, the average pore size may be 20 nm to 40 nm or 24 nm to 35 nm. Specifically, the average pore size may be measured using a porometer in accordance with ASTM F316-03.

In an exemplary embodiment, the polyolefin microporous membrane may have a shutdown temperature of 150°C or lower, 149,5°C or lower, 140°C to 150°C, 145°C to 149.5°C, 145°C to 149°C, or 145°C to 148.5°C. Since the shutdown temperature in the range described above is satisfied, excellent safety may be secured even when a temperature rise occurs due to the occurrence of battery abnormality.

In an exemplary embodiment, the polyolefin microporous membrane may have a meltdown temperature of 180°C or higher or 180°C to 190°C. Since the meltdown temperature in the range described above is satisfied, internal short circuit due to the rupture of the microporous membrane may be suppressed even when the temperature of a battery to which the polyolefin microporous membrane is applied rapidly rises, so that excellent safety may be secured.

In an exemplary embodiment, the polyolefin microporous membrane may have a thickness of 3 um or more, 5 um or more and 30 um or less, 20 um or less, 15 um or less, or a value between the above numerical values. For example, the thickness of the microporous membrane may be 3 um to 30 um, 3 um to 20 um, or 5 um to 15 um. The thickness of the microporous membrane may be measured using a contact type thickness meter (which may have a thickness precision of, for example, 0.1 $\mu$m). The microporous membrane of the present disclosure may implement excellent puncture strength, gas permeability, porosity, average pore size, and heat resistance simultaneously even at the thickness in the range described above, and, in particular, may have the shutdown temperature of 150°C or lower and the meltdown temperature of 180°C or higher. Accordingly, according to an exemplary embodiment, the separator for a secondary battery may be thinned, and is appropriate for being applied to a high capacity/high power battery.

In an exemplary embodiment, the polyolefin microporous membrane may be manufactured by a wet method including a sequential biaxial stretching process, and thus, a polyolefin microporous membrane satisfying the physical properties as described above simultaneously may be provided. Accordingly, since the polyolefin microporous membrane satisfies all of the physical properties described above, it has excellent mechanical strength and permeability and also significantly improved heat resistance at a high temperature.

Specifically, the polyolefin microporous membrane is manufactured by dissolving a diluent into a polyolefin resin, which includes a polyethylene resin and a polypropylene resin in a certain composition ratio, extruding and sequentially biaxially stretching the resulting mixture into a film, and subsequently extracting the diluent from the film. It can be produced using a wet process that involves a conventional sequential biaxial stretching process known to those skilled in the art, and it is not limited as long as it can produce a microporous membrane possessing the aforementioned physical properties.

As an exemplary embodiment, the diluent may be extracted from the sequentially biaxially stretched film, and the film may be dried with shrinkages of 5% or less in a machine direction and 10% or less in a transverse direction, but it may be performed by another way unless it goes beyond the scope of the present disclosure.

As an exemplary embodiment, the dried film obtained by an extraction/drying process may be heat treated in a temperature range between a melting temperature of the polyethylene (Tm) and a temperature higher than the melting temperature by 8°C (Tm + 8°C), but it may be performed by another way unless it goes beyond the scope of the present disclosure.

Hereinafter, the method for manufacturing a polyolefin microporous membrane of the present disclosure will be described.

The method for manufacturing a polyolefin microporous membrane according to an exemplary embodiment includes: (a) melt kneading a mixture including a polyolefin resin and a diluent through an extruder to prepare a molten material; (b) extruding the molten material to be molded into a sheet form; (c) sequentially biaxially stretching the sheet in machine and transverse directions to be molded into a film; (d) extracting the diluent from the stretched film and drying the film; and (e) heat treating the dried film, and the polyolefin resin of (a) may include 60 wt% to 80 wt% of a polypropylene having a viscosity average molecular weight of $1\times10^6$ g/mol to $3\times10^6$ g/mol and 20 wt% to 40 wt% of a polyethylene having a weight average molecular weight of $1\times10^5$ g/mol to $10\times10^5$ g/mol.

Hereinafter, each manufacturing step will be described.

First, (a) is a step of melting and kneading a mixture including a polyolefin resin and a diluent through an extruder to prepare a molten material, and the mixture may include the polyolefin resin and the diluent at a weight ratio of 10-60:90-40 or at a weight ratio of 20-40:80-60, for forming pores, but is not particularly limited thereto unless it goes beyond the scope of the present disclosure.

In step (a), the polyolefin resin may include 60 wt% to 80 wt% of the polypropylene having the viscosity average molecular weight of $1\times10^6$ g/mol to $3\times10^6$ g/mol and 20 wt% to 40 wt% of the polyethylene having the weight average molecular weight of $1\times10^5$ g/mol to $10\times10^5$ g/mol. For example, 65 wt% to 75 wt% of the polypropylene and 25 wt% to 35 wt% of the polyethylene may be included. According to an exemplary embodiment, when the polyolefin resin satisfies the above composition, a polyolefin microporous membrane having a puncture strength of 0.25 N/um or more, a gas permeability of $1.0\times10^{-5}$ Darcy or more, a porosity of 30% to 70%, an average pore size of 20 nm to 40 nm, a shutdown temperature of 150°C or lower, and a meltdown temperature of 180°C or higher may be manufactured. A secondary battery including the microporous membrane satisfying all of the physical properties may secure both excellent battery performance and safety.

Since the viscosity average molecular weight (or weight average molecular weight) and the melting temperature of the polypropylene and the polyethylene are as described above, detailed description thereof will be omitted.

In an exemplary embodiment, the diluent may be used without limitation as long as it is any organic compound forming a single phase with the polyolefin resin at an extrusion temperature. For example, the diluent may be one or a combination of two or more selected from the group consisting of aliphatic or cyclic hydrocarbons such as nonane, decane, decalin, paraffin oil, and paraffin wax, phthalic acid esters such as dibutyl phthalate and dioctyl phthalate, C10-C20 fatty acids such as palmitic acid, stearic acid, oleic acid, linoleic acid, and linolenic acid, and C10-C20 fatty alcohols such as cetyl alcohol, stearyl alcohol, and oleyl alcohol. A specific example of the diluent may include a paraffin oil having a kinetic viscosity at 40°C of $2\times10^{-5}$ m$^2$/s to $2\times10^{-4}$ m$^2$/s (20 cSt to 200 cSt), but it may be replaced with other kinds of diluents unless it goes beyond the scope of the present disclosure.

In addition, the mixture may further include any one or more of general additives for improving specific functions such as an oxidation stabilizer, a UV stabilizer, and an antistatic agent in a range where the characteristics of the microporous membrane are not greatly deteriorated.

Next, (b) is a step of extruding the molten material to mold a sheet form, and may be performed without limitation by a method known to a person skilled in the art. As an example, the molten material is extruded through a T-die and may be molded into a sheet form by a casting or calendaring method while cooling to a temperature of 10°C to 80°C, but it may be performed by other methods unless it goes beyond the scope of the present disclosure.

Next, (c) is a step of sequentially biaxially stretching the sheet in machine and transverse directions to form the sheet to a film, and longitudinal and transverse stretching ratios may be independently of each other 4 times or more, 6 times or more, 10 times or more and 15 times or less, or a value between the above numerical values. For example, the longitudinal and transverse stretching ratios may be 4 times to 15 times or 6 times to 10 times its original size. Since the longitudinal and transverse stretching ratios satisfy the range described above, the polyolefin microporous membrane having the physical properties as described above simultaneously may be manufactured.

The stretching in step (c) may be performed by a sequential stretching method in a roll or tenter manner, and performed at a temperature in a range between a temperature lower than the melting temperature of polypropylene by 80°C and the melting temperature of polypropylene. When the stretching is performed in the temperature range described above, flowability of the polypropylene resin for effective stretching may be secured. Specifically, since stretching occurs uniformly throughout the sheet and fracture by stretching does not occur, stretching may stably occur, and thus, a high-quality microporous membrane in which physical properties such as uniform gas permeability and puncture strength are implemented throughout the membrane may be manufactured. As an example, the stretching may be performed at 100°C to 170°C or 110°C to 160°C, but is not limited thereto.

Next, (d) is a step of extracting the diluent from the stretched film and drying the film, and is performed by extracting the diluent inside the film using an organic solvent and drying the organic solvent in the film in which the diluent is replaced with the organic solvent. The organic solvent may be used without particular limitation as long as the diluent may be extracted. For example, methyl ethyl ketone, methylene chloride, hexane, and other suitable solvents may be used in terms of high extraction efficiency and rapid drying with the organic solvent, but other methods may be performed unless it goes beyond the scope of the present disclosure.

In an exemplary embodiment, (d) may be extracting the diluent from the stretched film and drying the film with shrinkages of 5% or less in the machine direction and 10% or less in the transverse direction. When the diluent is extracted from the film manufactured of the polyolefin resin satisfying the composition described above and the film is shrunk and dried under the conditions described above, a microporous membrane satisfying the puncture strength, the gas permeability, the porosity, the average pore size, the shutdown temperature, and the meltdown temperature as described above simultaneously may be provided. A secondary battery including the microporous membrane as such may secure both excellent battery performance and safety.

As an exemplary embodiment, the longitudinal shrinkage rate(shrinkage rate in MD) during the extraction/drying process may be 5% or less, 4% or less, or 3.5% or less and 1% or more, and for example, 1% to 5%, 1% to 4%, or 1% to 3.5%. The transverse shrinkage rate(shrinkage rate in TD) during the extraction/drying process may be 10% or less, 9% or less, 8.5% or less and 1% or more, and for example, may be 1% to 10%, 1% to 9%, or 1% to 8.5%. Herein, the longitudinal (or transverse) shrinkage rate may be calculated by the following Equation 1:

Longitudinal (or transverse) shrinkage rate (%) = [{longitudinal (or transverse) length before extraction
- longitudinal (or transverse) length after drying} / longitudinal (or transverse) length before extraction]      [Equation 1]
$\times$ 100

The longitudinal or transverse shrinkage during the extraction/drying process may be adjusted by tension applied to the film in the drying process. When the tension is high, small shrinkage occurs, and when the tension is low, big shrinkage occurs. The tension applied to the film in the drying process may be determined differently depending on the thickness of the film, but the size may be appropriately changed unless it goes beyond the scope of the present disclosure.

As an exemplary embodiment, step (d) may be performed at a temperature of 40°C or lower, but may be performed at other temperatures unless it goes beyond the scope of the present disclosure.

(e) is a step of heat treating the dried film, and the heat resistance of the finally manufactured polyolefin microporous membrane may be improved by removing residual stress in the film by applying heat in a state of being held by force so that dimensional changes in the machine and transverse directions do not occur, using a device in a roll or tenter manner.

In an exemplary embodiment, (e) step may be heat treating the dried film in a temperature range between a melting temperature of the polyethylene (Tm) and a temperature higher than the melting temperature by 8°C (Tm + 8°C).

When the film manufactured of the polyolefin resin satisfying the composition described above is heat treated at the temperature under the conditions described above, a microporous membrane satisfying the puncture strength, the gas permeability, the porosity, the average pore size, the shutdown temperature, and the meltdown temperature as described above simultaneously may be provided. A secondary battery including the microporous membrane as such may secure both excellent battery performance and safety.

In an exemplary embodiment, the heat treatment in step (e) may be performed at a temperature in a range of 133°C to 148 °C, 133°C to 145°C, or 134°C to 142°C. Since the heat treatment is performed at the temperature in the range described above, a polyolefin microporous membrane satisfying all of the physical properties as described above may be manufactured.

In an exemplary embodiment, the heat treatment in step (e) may be heat fixation by heat stretching and/or heat mitigation. That is, the heat treatment may be performed in various ways by adjusting tension during the heat treatment. The heat treatment may be repeated 1 to 3 times, but is not necessarily limited thereto.

Step (e) may include, for example, a heat stretching process of stretching in the machine or transverse directions, a heat fixation process of applying heat while fixing longitudinal and transverse length/width, and a heat mitigation process of mitigating (shrinking) in the machine or transverse directions. As an example, the heat mitigation process may be mitigating to 80% to 99% or 90% to 99% of the transverse width before the heat mitigation process, and the heat stretching process may be stretching to 120% to 160% or 140% to 160% of the transverse width before the heat stretching process, but they may be performed by another way unless they go beyond the scope of the present disclosure.

The present disclosure provides a separator including the polyolefin microporous membrane as described above, and the separator may be a separator used in any known energy storage device and is not particularly limited, but as a non-limiting example, may include a separator used in a secondary lithium battery.

Hereinafter, the examples of the present disclosure will be further described with reference to the specific experimental examples. It is apparent to those skilled in the art that the examples and the comparative examples included in the experimental examples only illustrate the present disclosure and do not limit the appended claims, and various modifications and alterations of the examples may be made within the range of the scope and spirit of the present disclosure, and these modifications and alterations will fall within the appended claims.

[Method for measuring physical properties]

**1. Viscosity average molecular weight (g/mol)**

The viscosity average molecular weight was determined by measuring an intrinsic viscosity ($\eta$) using a Crystex QC model available from Polymer Char and performing calculation from a Margolies-equation represented by the following Equation 2. The intrinsic viscosity was measured at 165 °C using 1,2,4-trichlorobenzene (TCB) as a solvent.

$$[\text{Equation 2}]$$

$$Mv = 5.37 \times 10^4 \times [\eta]^{1.49}$$

**2. Weight average molecular weight (g/mol)**

The weight average molecular weight (Mw) was measured using high temperature gel permeation chromatography (GPC) available from Agilent Technologies. PLgel Guard and PLgel Olexis were used as a GPC column, 1,2,4-trichlorobenzene (TCB) was used as a solvent, polystyrene was used as a standard sample, and analysis was performed at 140°C.

**3. Melting temperature (°C)**

The melting temperature was determined by a peak position in a curve measured by a differential scanning calorimeter (DSC). A temperature range from 25°C to 200°C was scanned at a heating rate of 10°C/min under a nitrogen atmosphere, using a Thermal Analysis System DSC 3+ model which is a differential scanning calorimeter (DSC) available from Mettler Toledo. The amount of the measurement sample at this time was 5 mg.

**4. Thickness of microporous membrane (um)**

The thickness of the microporous membrane was measured using a contact type thickness meter having a thickness precision of 0.1 um. The measurement was performed at a measurement pressure of 0.63 N using TESA Mu-Hite Electronic Height Gauge available from TESA.

**5. Puncture strength (N/$\mu$m)**

The puncture strength was measured by attaching a pin tip having a diameter of 1.0 mm and a radius of curvature of 0.5 mm to Universal Test Machine (UTM) 3345 available from INSTRON and pressing a microporous membrane at a speed of 120 mm/min. At this time, a load (N) when the microporous membrane was broken was divided by a thickness ($\mu$m) of the microporous membrane to calculate the puncture strength.

**6. Gas permeability (Darcy)**

The gas permeability was measured using a porometer (CFP-1500-AEL available from PMI). Generally, the gas permeability is expressed in a Gurley number, but since the Gurley number is not corrected for the effect of the thickness, it is difficult to know relative permeability depending on a pore structure. In order to solve the problem, the gas permeability of the present disclosure was measured using a Darcy permeability coefficient calculated from the following Mathematical Formula 3. Nitrogen was used as gas, and an average value of the Darcy permeability coefficients measured in a range of 100 to 200 psi was calculated.

[Equation 3]

$$\text{Darcy permeability coefficient (C)} = (8F \cdot T \cdot V)/(\pi D^2 (P^2 - 1))$$

F = flow velocity (in cc/cm)
T = sample thickness (in mm; using the value obtained in section 4.)
V = viscosity of gas (0.185 cP, or 18.5 $\mu$Pa$\cdot$s at 20 °C for $N_2$)
D = diameter of sample (in mm)
P = pressure (in psi)

**7. Porosity (%)**

The porosity of the microporous membrane was calculated by the following equation 4. Specifically, a sample having a width of A cm, a length of B cm, and a thickness of T cm was prepared, its mass was measured, and the porosity was calculated from a ratio between a mass of a resin having the same volume and a mass of a microporous membrane.

[Mathematical Formula 4]

$$\text{Porosity (\%)} = 100 \times \{1 - M/(A \times B \times T \times \rho)\}$$

wherein M is a mass (g) of a microporous membrane, and $\rho$ is a density (g/cm$^3$) of a polyolefin resin forming a microporous membrane.

**8. Average pore size (nm)**

The average pore size was measured from a porometer (CFP-1500-AEL available from PMI) in accordance with ASTM F316-03. The average pore size was measured by a half dry method, and a Galwick solution (surface tension: 15.9 dyne/cm) provided for measuring a pore size by PMI was used.

**9. Shutdown temperature and meltdown temperature**

The shutdown temperature and the meltdown temperature of the microporous membrane were measured, using a custom-made setup for measuring electrical resistance. The setup for measuring electrical resistance was manufactured by the following method: A microporous membrane prepared in a 2.5 cm×2.5 cm size was placed between two glass cells, and then tightly fixed with a clip so that the binding site of the glass cell did not move. Next, an electrolyte solution in which 1 M hexafluorophosphate ($LiPF_6$) was dissolved in a propylene carbonate (PC) solvent was injected carefully to each glass cell to avoid bubble formation. An aluminum electrode was placed in each glass cell to manufacture the final cell for measuring electrical resistance. The manufactured cell for measuring electrical resistance was placed in an oil bath preheated to 120°C, and the two electrodes were connected to an impedance analyzer (ZIVE SP2 available from ZIVE Lab). The resistance value of the cell was measured using an alternating current of 1 kHz (5 mV), while the oil bath temperature was heated to a heating rate of 2°C/min. The cell resistance value was recorded over temperature to examine the shutdown temperature and the meltdown temperature. The shutdown temperature was set as a temperature at which the resistance value was 1000 $\Omega$ or more, and the meltdown temperature was set as a temperature at which the resistance value was back to 1000 S2 or less after the shutdown temperature.

**<Example 1>**

A polyolefin resin including 25 wt% of a polyethylene resin having a weight average molecular weight of $6.0 \times 10^5$ g/mol and a melting temperature of 134°C and 75 wt% of a polypropylene resin having a viscosity average molecular weight of $1.5 \times 10^6$ g/mol and a melting temperature of 164°C was prepared. Next, a mixture including the polyolefin resin and a paraffin oil having a kinematic viscosity at 40°C of $8 \times 10^{-5}$ m$^2$/s (80 cSt) at a weight ratio of 30:70 was melted and kneaded using a biaxial extruder to prepare a molten material. The melting temperature was measured via DSC using 5 mg of sample under nitrogen atmosphere and a temperature range between 25 °C and 200 °C at a heating rate of 10 °C/min on a Thermal Analysis System DSC 3+ model available from Mettler Toledo.

The molten material was continuously extruded through a T-die and a casting roll set to 30°C was used to manufacture a sheet having a width of 300 mm and an average thickness of 1200 um.

The sheet was longitudinally stretched in a roll manner so as to be 6 times its original size at a stretching temperature of 115°C, and continuously transversely stretched to 6 times its original size at a stretching temperature of 140°C by guidance with a tenter.

The paraffin oil was extracted from the film which completed stretching in the machine and transverse directions, using methylene chloride at 25°C. The film from which the paraffin oil had been extracted was dried at 60°C while adjusting tension in an opposite direction to shrinkage stress occurring in the drying process after extraction so that the film was shrunk by 2% in the machine direction and 6% in the transverse direction as compared with the film before extraction.

The film after drying was fixed with heat at 140°C for about 20 seconds using a tenter type heat fixation device to manufacture a polyolefin microporous membrane having a thickness of 10.5 um. The physical properties of the finally manufactured microporous membrane are listed in the following Table 1.

**<Example 2>**

A polyolefin microporous membrane was manufactured in the same manner as in Example 1, except that a polyolefin resin including 20 wt% of the polyethylene resin and 80 wt% of the polypropylene resin was used instead of the polyolefin resin of Example 1, and the results are listed in Table 1.

**<Example 3>**

A polyolefin microporous membrane was manufactured in the same manner as in Example 1, except that a polyolefin resin including 40 wt% of the polyethylene resin and 60 wt% of the polypropylene resin was used instead of the polyolefin resin of Example 1, and the results are listed in Table 1.

**<Example 4>**

A polyolefin microporous membrane was manufactured in the same manner as in Example 1, except that a polyethylene resin having a weight average molecular weight of $3.0 \times 10^5$ g/mol and a melting temperature of 134°C was used instead of the polyethylene resin of Example 1, and the results are listed in Table 1.

**<Example 5>**

A polyolefin microporous membrane was manufactured in the same manner as in Example 1, except that a polyethylene resin having a weight average molecular weight of $10 \times 10^5$ g/mol and a melting temperature of 134°C was used instead of the polyethylene resin of Example 1 and a polypropylene resin having a viscosity average molecular weight of $2.0 \times 10^6$ g/mol and a melting temperature of 164°C was used instead of the polypropylene resin of Example 1, and the results are listed in Table 1.

**<Example 6>**

A polyolefin microporous membrane was manufactured in the same manner as in Example 1, except that the film from which a paraffin oil had been extracted was dried so as to be shrunk by 3% in the machine direction and 8% in the transverse direction as compared with the film before extraction, and the results are listed in Table 1.

**<Example 7>**

A polyolefin microporous membrane was manufactured in the same manner as in Example 1, except that the film from which a paraffin oil had been extracted was dried so as to be shrunk by 5% in the machine direction and 10% in the transverse direction as compared with the film before extraction, and the results are listed in Table 1.

**<Example 8>**

A polyolefin microporous membrane was manufactured in the same manner as in Example 1, except that the heat fixation temperature was 142°C, and the results are listed in Table 1.

**<Example 9>**

A polyolefin microporous membrane was manufactured in the same manner as in Example 1, except that the heat fixation temperature was 136 °C, and the results are listed in Table 1.

**<Comparative Example 1>**

A polyolefin microporous membrane was manufactured in the same manner as in Example 1, except that a polyolefin resin including 10 wt% of the polyethylene resin and 90 wt% of the polypropylene resin was used instead of the polyolefin resin of Example 1, and the results are listed in Table 2.

**<Comparative Example 2>**

A polyolefin microporous membrane was manufactured in the same manner as in Example 1, except that a polyolefin resin including 18 wt% of the polyethylene resin and 82 wt% of the polypropylene resin was used instead of the polyolefin resin of Example 1, and the results are listed in Table 2.

**<Comparative Example 3>**

A polyolefin microporous membrane was manufactured in the same manner as in Example 1, except that a polyolefin resin including 45 wt% of the polyethylene resin and 55 wt% of the polypropylene resin was used instead of the polyolefin resin of Example 1, and the results are listed in Table 2.

**<Comparative Example 4>**

A polyolefin microporous membrane was manufactured in the same manner as in Example 1, except that a polyethylene resin having a weight average molecular weight of $1.1 \times 10^6$ g/mol and a melting temperature of 134°C was used instead of the polyethylene resin of Example 1 and the film from which a paraffin oil had been extracted was dried so as to be shrunk by 4% in the machine direction and 9% in the transverse direction as compared with the film before extraction, and the results are listed in Table 2.

**<Comparative Example 5>**

A polyolefin microporous membrane was manufactured in the same manner as in Example 1, except that a polyethylene resin having a weight average molecular weight of $6.0 \times 10^5$ g/mol and a melting temperature of 132°C was used instead of the polyethylene resin of Example 1 and the heat fixation temperature was 138°C, and the results are listed in Table 2.

**<Comparative Example 6>**

A polyolefin microporous membrane was manufactured in the same manner as in Example 1, except that a polypropylene resin having a viscosity average molecular weight of $1.5 \times 10^6$ g/mol and a melting temperature of 158°C was used instead of the polypropylene resin of Example 1, and the results are listed in Table 2.

## <Comparative Example 7>

A polyolefin microporous membrane was manufactured in the same manner as in Example 1, except that the film from which a paraffin oil had been extracted was dried to be shrunk by 7% in the machine direction and 14% in the transverse direction as compared with the film before extraction, and the results are listed in Table 2.

## <Comparative Example 8>

A polyolefin microporous membrane was manufactured in the same manner as in Example 1, except that the film from which a paraffin oil had been extracted was dried so as to be stretched by 5% in the machine direction and 8% in the transverse direction as compared with the film before extraction and the heat fixation temperature was 136°C, and the results are listed in Table 2.

## <Comparative Example 9>

A polyolefin microporous membrane was manufactured in the same manner as in Example 1, except that the heat fixation temperature was 145 °C, and the results are listed in Table 2.

[Table 1]

|  | Thickness (μm) | Puncture strength (N/μm) | Gas permeability ($\times 10^{-5}$ Darcy) | Porosity (%) | Average pore size (nm) | Shutdown temperature (°C) | Meltdown temperature (°C) |
|---|---|---|---|---|---|---|---|
| Ex. 1 | 10.5 | 0.32 | 1.4 | 40.6 | 28.3 | 148.3 | >180 |
| Ex. 2 | 102 | 0.31 | 1.4 | 40.1 | 27.9 | 147.9 | >180 |
| Ex. 3 | 10.3 | 0.31 | 1.3 | 37.3 | 26.1 | 1472 | >180 |
| Ex. 4 | 11.1 | 0.32 | 1.38 | 40.5 | 282 | 148.4 | >180 |
| Ex. 5 | 11.4 | 0.38 | 1.23 | 40.1 | 24.8 | 149.5 | >180 |
| Ex. 6 | 102 | 0.34 | 1.21 | 38.1 | 26.3 | 148.7 | >180 |
| Ex. 7 | 10.0 | 0.36 | 1.17 | 38.2 | 25.4 | 148.5 | >180 |
| Ex. 8 | 9.8 | 0.32 | 1.3 | 37.2 | 27.1 | 148.3 | >180 |
| Ex. 9 | 10.9 | 0.32 | 1.51 | 42.0 | 28.0 | 148.5 | >180 |

[Table 2]

|  | Thickness (μm) | Puncture strength (N/μm) | Gas permeability ($\times 10^{-5}$ Darcy) | Porosity (%) | Average pore size (nm) | Shutdown temperature (°C) | Meltdown temperature (°C) |
|---|---|---|---|---|---|---|---|
| Comp. Ex. 1 | 11.8 | 029 | 1.5 | 41.1 | 29.5 | 158.4 | >180 |
| Comp. Ex. 2 | 11.5 | 029 | 1.4 | 40.8 | 29.8 | 155.9 | >180 |
| Comp. Ex.3 | 9.6 | 0.17 | 0.8 | 31.1 | 24.8 | 144.4 | >180 |
| Comp. Ex. 4 | 9.5 | 0.37 | 0.8 | 32.7 | 34.9 | 152.7 | >180 |
| Comp. Ex. 5 | 9.0 | 0.35 | 0.7 | 30.3 | 24.1 | 148.5 | >180 |
| Comp. Ex. 6 | 10.4 | 0.32 | 1.37 | 40.4 | 282 | 148.7 | 174 |
| Comp. Ex. 7 | 8.4 | 0.39 | 0.4 | 26.3 | 22.4 | 149.3 | >180 |
| Comp. Ex. 8 | 12.8 | 025 | 2.1 | 35.4 | 42.5 | 151.8 | >180 |
| Comp. Ex. 9 | 8.8 | 0.43 | 0.5 | 28.8 | 23.7 | 148.5 | >180 |

Referring to Table 1, it was found that the microporous membranes of Examples 1 to 9 all revealed the desired properties in terms of puncture strength, gas permeability, porosity and average pore size, which yielded improved battery

**EP 4 578 899 A1**

performance. In addition, the microporous membranes of Examples 1 to 9 all revealed the desired shutdown and meltdown temperatures, which yielded enhanced thermal safety.

However, the microporous membranes of Comparative Examples 1 and 2 had shutdown temperatures of 158.4°C and 155.9°C, respectively, due to high amounts of more than 80 wt% of polypropylene resin. Accordingly, the batteries to which Comparative Examples 1 and 2 were applied had closed pores and greatly deteriorated thermal safety.

The microporous membrane of Comparative Example 3 used less than 60 wt% of the polypropylene resin, and as a result, did not satisfy the ranges of the puncture strength and the gas permeability to be implemented according to the present disclosure. As a result, the battery, in which Comparative Example 3 was used, did not achieve satisfying battery performance.

The microporous membrane of Comparative Example 4 used the polyethylene resin having a weight average molecular weight of more than $1.0 \times 10^6$ g/mol, and as a result, did not satisfy the ranges of the gas permeability and the shutdown temperature to be implemented according to the present disclosure. As a result, the battery, in which Comparative Example 4 was applied, did not achieve satisfying battery performance and showed greatly deteriorated thermal safety.

The microporous membrane of Comparative Example 5 used the polyethylene resin having a melting temperature of less than 133°C, and as a result, did not satisfy the range of the gas permeability to be implemented according to the present disclosure. As a result, the battery, in which Comparative Example 5 was applied, did not achieve satisfying battery performance.

The microporous membrane of Comparative Example 6 used the polypropylene resin having a melting temperature of less than 160°C, and as a result, did not satisfy the range of the meltdown temperature to be implemented according to the present disclosure. As a result, in the battery, in which Comparative Example 6 was used, a positive electrode and a negative electrode were internally short-circuited due to a rupture of the separator leading to greatly deteriorated thermal safety.

The microporous membrane of Comparative Example 7 was subjected to an extraction/drying process at a longitudinal shrinkage of more than 5% and a transverse shrinkage of more than 10%, and as a result, did not satisfy the ranges of the gas permeability and the porosity to be implemented according to the present disclosure. As a result, the battery, in which Comparative Example 7 was used, did not achieve satisfying battery performance.

The microporous membrane of Comparative Example 8 was subjected to an extraction/drying process by stretching without longitudinal shrinkage by 5% or less, and as a result, did not satisfy the ranges of the average pore size and the shutdown temperature to be implemented according to the present disclosure. As a result, the battery, in which Comparative Example 8 was used, did not achieve satisfying battery performance and had greatly deteriorated thermal safety.

The microporous membrane of Comparative Example 9 was subjected to a heat fixation process at a temperature higher by 11°C than the melting temperature of the polyethylene resin, and as a result, did not satisfy the ranges of the gas permeability and the porosity to be implemented according to the present disclosure. As a result, the battery, in which Comparative Example 9 was used, did not achieve satisfying battery performance.

The polyolefin microporous membrane according to the present disclosure may secure significantly improved heat resistance at a high temperature.

In addition, the polyolefin microporous membrane according to the present disclosure may have closed pores at a low temperature and maintain a separator form at a high temperature.

In addition, the polyolefin microporous membrane according to the present disclosure may have a shutdown temperature of 150°C or lower and a meltdown temperature of 180°C or higher.

In addition, the polyolefin microporous membrane according to the present disclosure may have excellent mechanical strength and gas permeability.

In addition, the present disclosure may provide a battery having excellent thermal safety at a high temperature by including the polyolefin microporous membrane according to an exemplary embodiment.

The above description is only an example to which the principle of the present disclosure is applied, and other constitutions may be further included without departing from the scope of the present disclosure.

**Claims**

1. A polyolefin microporous membrane comprising: 60 wt% to 80 wt% of a polypropylene having a viscosity average molecular weight of $1 \times 10^6$ g/mol to $3 \times 10^6$ g/mol and 20 wt% to 40 wt% of a polyethylene having a weight average molecular weight of $1 \times 10^5$ g/mol to $10 \times 10^5$ g/mol,
wherein the polyolefin microporous membrane has a puncture strength of 0.25 N/um or more, a gas permeability of $1.0 \times 10^{-5}$ Darcy ($9.86923 \times 10^{-18}$ m$^2$) or more, a porosity of 30% to 70%, an average pore size of 20 nm to 40 nm, and a shutdown temperature of 150°C or lower.

2.   The polyolefin microporous membrane of claim 1, wherein the polypropylene has a melting temperature of 160°C or higher.

3.   The polyolefin microporous membrane of claim 1 or 2, wherein the polyethylene has a melting temperature of 133°C or higher.

4.   The polyolefin microporous membrane of any one of claims 1 to 3, wherein the microporous membrane has a thickness of 3 um to 30 $\mu$m.

5.   The polyolefin microporous membrane of any one of claims 1 to 4, wherein the shutdown temperature is 149°C or lower.

6.   The polyolefin microporous membrane of any one of claims 1 to 4, which has a meltdown temperature of 180°C or higher.

7.   The polyolefin microporous membrane of any one of claims 1 to 6, wherein the polyolefin microporous membrane is manufactured by a wet method including a sequential biaxial stretching process.

8.   A method for manufacturing a polyolefin microporous membrane, the method comprising:

   (a) melt kneading a mixture including a polyolefin resin and a diluent through an extruder to prepare a molten material;
   (b) extruding the molten material to be molded into a sheet form;
   (c) sequentially biaxially stretching the sheet in machine and transverse directions to be molded into a film;
   (d) extracting the diluent from the stretched film and drying the film; and
   (e) heat treating the dried film,

   wherein the polyolefin resin of (a) includes 60 wt% to 80 wt% of a polypropylene having a viscosity average molecular weight of $1\times10^6$ g/mol to $3\times10^6$ g/mol and 20 wt% to 40 wt% of a polyethylene having a weight average molecular weight of $1\times10^5$ g/mol to $10\times10^5$ g/mol.

9.   The method for manufacturing a polyolefin microporous membrane of claim 8, wherein (d) is extracting the diluent from the stretched film and drying the film with shrinkages of 5% or less in the machine direction and 10% or less in the transverse direction.

10.  The method for manufacturing a polyolefin microporous membrane of claim 8 or 9, wherein (e) is heat treating the dried film in a temperature range between a melting temperature of the polyethylene (Tm) and a temperature higher than the melting temperature by 8°C (Tm + 8°C).

11.  A separator comprising the polyolefin microporous membrane of any one of claims 1 to 7.

12.  An electrochemical device comprising the separator of claim 11.

13.  The electrochemical device of claim 12, which is a secondary battery comprising said separator between a positive electrode and a negative electrode.

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/264483 A1 (OZAKI HIROYUKI [JP] ET AL) 15 November 2007 (2007-11-15) <br> * paragraph [0009] * <br> * example 6 * <br> * claims 1-4 * <br> - - - - - | 1-13 | INV. <br> C08J5/18 <br> B01D71/26 <br> H01M50/417 |
| A | US 2007/264578 A1 (OZAKI HIROYUKI [JP] ET AL) 15 November 2007 (2007-11-15) <br> * paragraph [0009] * <br> * example 5 * <br> * claims 1-4 * <br> - - - - - | 1-13 | |
| A | US 2012/171548 A1 (BUSCH DETLEF [DE] ET AL) 5 July 2012 (2012-07-05) <br> * example 1 * <br> * claims 21, 40 * <br> - - - - - | 1-13 | |
| A | US 2010/316902 A1 (TAKITA KOTARO [JP] ET AL) 16 December 2010 (2010-12-16) <br> * example 7 * <br> * claims 1, 6, 10, 11, 21 * <br> - - - - - | 1-13 | |

**TECHNICAL FIELDS SEARCHED (IPC)**

C08J
H01M
B01D

The present search report has been drawn up for all claims

| Place of search | Date of completion of the search | Examiner |
|---|---|---|
| Munich | 2 May 2025 | Vandoolaeghe, P |

EPO FORM 1503 03.82 (P04C01)

## ANNEX TO THE EUROPEAN SEARCH REPORT
## ON EUROPEAN PATENT APPLICATION NO.

EP 24 22 3096

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2025

| Patent document cited in search report | Publication date | Patent family member(s) | Publication date |
|---|---|---|---|
| US 2007264483 A1 | 15-11-2007 | AT E548413 T1 | 15-03-2012 |
| | | CN 101448881 A | 03-06-2009 |
| | | EP 2018406 A1 | 28-01-2009 |
| | | JP 5576609 B2 | 20-08-2014 |
| | | JP 2009537638 A | 29-10-2009 |
| | | KR 20090019833 A | 25-02-2009 |
| | | TW I428171 B | 01-03-2014 |
| | | US 2007264483 A1 | 15-11-2007 |
| | | US 2010151334 A1 | 17-06-2010 |
| | | WO 2007132942 A1 | 22-11-2007 |
| US 2007264578 A1 | 15-11-2007 | CN 101448883 A | 03-06-2009 |
| | | EP 2018407 A1 | 28-01-2009 |
| | | JP 5512976 B2 | 04-06-2014 |
| | | JP 2009537637 A | 29-10-2009 |
| | | KR 20090027207 A | 16-03-2009 |
| | | TW 200801091 A | 01-01-2008 |
| | | US 2007264578 A1 | 15-11-2007 |
| | | WO 2007132943 A1 | 22-11-2007 |
| US 2012171548 A1 | 05-07-2012 | BR PI1011646 A2 | 22-03-2016 |
| | | CA 2765274 A1 | 23-12-2010 |
| | | CN 102460774 A | 16-05-2012 |
| | | EP 2510565 A1 | 17-10-2012 |
| | | JP 5718325 B2 | 13-05-2015 |
| | | JP 2012531009 A | 06-12-2012 |
| | | KR 20120069611 A | 28-06-2012 |
| | | US 2012171548 A1 | 05-07-2012 |
| | | WO 2010145770 A1 | 23-12-2010 |
| US 2010316902 A1 | 16-12-2010 | US 2010316902 A1 | 16-12-2010 |
| | | WO 2009084719 A1 | 09-07-2009 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110101202